(19) Europäisches Patentamt
European Patent Office
Office européen des brevets

(11) **EP 2 755 868 B1**

(12) **EUROPÄISCHE PATENTSCHRIFT**

(45) Veröffentlichungstag und Bekanntmachung des Hinweises auf die Patenterteilung:
**04.01.2017   Patentblatt 2017/01**

(21) Anmeldenummer: **12758856.4**

(22) Anmeldetag: **12.09.2012**

(51) Int Cl.:
*B60R 16/023* (2006.01)       *G01C 21/16* (2006.01)
*G01C 25/00* (2006.01)       *G01S 19/49* (2010.01)

(86) Internationale Anmeldenummer:
**PCT/EP2012/067878**

(87) Internationale Veröffentlichungsnummer:
**WO 2013/037855 (21.03.2013 Gazette 2013/12)**

(54) **AUSRICHTUNGSMODELL FÜR EIN SENSORSYSTEM**

SENSOR SYSTEM COMPRISING A VEHICLE MODEL UNIT

SYSTÈME CAPTEUR COMPORTANT UNE UNITÉ DE MODÈLE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2011   DE 102011082534**
**12.09.2011   DE 102011082535**
**12.09.2011   DE 102011082539**
**12.09.2011   DE 102011082548**
**12.09.2011   DE 102011082549**
**12.09.2011   DE 102011082551**
**12.09.2011   DE 102011082552**
**21.11.2011   DE 102011086710**
**02.05.2012   DE 102012207297**

(43) Veröffentlichungstag der Anmeldung:
**23.07.2014   Patentblatt 2014/30**

(73) Patentinhaber: **Continental Teves AG&Co. Ohg 60488 Frankfurt (DE)**

(72) Erfinder: **STEINHARDT, Nico 60327 Frankfurt (DE)**

(74) Vertreter: **Wagner, Philipp et al Conti Temic microelectronic GmbH Intellectual Property Sieboldstraße 19 90411 Nürnberg (DE)**

(56) Entgegenhaltungen:
**WO-A2-2007/143806       DE-A1- 4 325 413
DE-A1-102006 009 682       DE-A1-102010 063 984
GB-A- 2 414 815       US-A- 4 679 808
US-A1- 2007 265 756**

EP 2 755 868 B1

**Beschreibung**

Die Erfindung betrifft ein Sensorsystem gemäß Oberbegriff von Anspruch 1 sowie dessen Verwendung in Kraftfahrzeugen, insbesondere in Automobilen.

Offenlegungsschrift DE 10 2010 063 984 A1 beschreibt ein Sensorsystem, umfassend mehrere Sensorelemente und eine Signalverarbeitungseinrichtung, wobei die Signalverarbeitungseinrichtung so ausgelegt ist, dass die Ausgangssignale der Sensorelemente gemeinsam ausgewertet werden.

Die WO 2007/143806 A2 beschreibt ein System zur Schätzung einer Geschwindigkeit, Position oder Lage eines Fahrzeugs, dass mit einem GNSS-Empfänger, einem Trägheitsnavigationssystem (INS) sowie Fahrzeugsensoren ausgestattet ist. Weiterhin weist das System einen rekursiven Schätzfilter zur Integration verfügbarer Daten und Abschätzung von Fehlerzuständen, einschließlich Positionsfehlern, Geschwindigkeitsfehlern, Lagefehlern, IMU Sensorfehlern, Fahrzeugsensorfehlern und GNSS Mehrdeutigkeiten auf.

Der Erfindung liegt die Aufgabe zu Grunde, ein Sensorsystem vorzuschlagen, welches eine relativ hohe Genauigkeit bezüglich seiner Signalverarbeitung bietet bzw. ermöglicht.

Diese Aufgabe wird gelöst durch das Sensorsystem gemäß Anspruch 1.

Das Sensorsystem ist zweckmäßigerweise in einem Fahrzeug, insbesondere einem Kraftfahrzeug, besonders bevorzugt einem Automobil, angeordnet.

Es ist bevorzugt, dass die erste, die zweite und die dritte definierte Achse ein Erzeugendensystem bilden, und dabei insbesondere senkrecht zueinander ausgerichtet sind.

Die Fahrzeugmodelleinheit ist vorzugsweise so ausgebildet, dass sie zur Berechnung ein Verfahren der kleinsten Fehlerquadrate zur Lösung eines überbestimmten Gleichungssystems, insbesondere als Least-Squared-Error-Verfahren bekannt, verwendet.

Es ist bevorzugt, dass jeweils eins der Raddrehzahlsensorelemente jedem Rad des Fahrzeugs zugeordnet ist, wobei die Fahrzeugmodelleinheit so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das wenigstens eine Lenkwinkelsensorelement für die eine oder jeweils für die mehreren gelenkten/ lenkbaren Achsen und/oder durch zumindest eine Modellannahme für eine oder mehrere ungelenkte/ nicht lenkbare Achsen, die Geschwindigkeitskomponenten und/oder die Geschwindigkeit, jedes Rades, entlang/bezüglich der ersten und der zweiten definierten Achse direkt oder indirekt berechnet, wobei aus diesen Geschwindigkeitskomponenten bezogen auf die jeweiligen Räder und/oder den Geschwindigkeiten jeweils bezüglich der ersten und zweiten definierten Achse der zugeordneten Räder, die Geschwindigkeit entlang einer ersten definierten Achse, die Geschwindigkeit entlang einer zweiten definierten Achse sowie die Drehrate um eine dritte definierte Achse berechnet wird.

Es ist zweckmäßig, dass das Sensorsystem vier Raddrehzahlsensorelemente aufweist, wobei jeweils eins der Raddrehzahlsensorelemente jedem Rad des Fahrzeugs zugeordnet ist, wobei die Fahrzeugmodelleinheit so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das Lenkwinkelsensorelement für die Vorderräder und aus einer Modellannahme oder wenigstens mittels eines weiteren Lenkwinkelsensorelements für die Hinterräder, die Geschwindigkeitskomponenten und/oder die Geschwindigkeit, jedes Rades, entlang/bezüglich der ersten und der zweiten definierten Achse direkt oder indirekt berechnet, wobei aus diesen acht Geschwindigkeitskomponenten und/oder den vier Geschwindigkeiten jeweils bezüglich der ersten und zweiten definierten Achse, die Geschwindigkeit entlang einer ersten definierten Achse, die Geschwindigkeit entlang einer zweiten definierten Achse sowie die Drehrate um eine dritte definierte Achse berechnet wird.

Es ist bevorzugt, dass der Lenkwinkel jeden Rades ermittelt bzw. berechnet wird, aus einem Lenkradwinkelsensorelement, also einem Sensorelement, welches den Fahrerwunsch-gemäßen Lenkwinkel erfasst, und einer Information über die Lenkungsübersetzungs-Kennlinie, welche insbesondere in der Fahrzeugmodelleinheit oder in einem anderen Teil der Signalverarbeitungseinrichtung gespeichert ist.

Es ist zweckmäßig, dass die Fahrzeugmodelleinheit so ausgebildet ist, dass sie bei ihrer Berechnung mindestens folgende physikalische Größen und/oder Parameter berücksichtigt

a) den Lenkwinkel jedes Rades, insbesondere durch den Lenkwinkelsensor für die beiden Vorderräder erfasst, wobei die Modellannahme getroffen wird, dass der Lenkwinkel der Hinterräder bekannt ist, insbesondere ist der Lenkwinkel der Hinterräder gleich Null oder der Lenkwinkel der Hinterräder wird zusätzlich erfasst,

b) die Raddrehzahl oder eine davon abhängige Größe jeden Rades,

c) die Drehrichtung jeden Rades,

d) der dynamische Halbmesser und/oder Raddurchmesser jeden Rades oder eine davon abgeleitete Größe als Parameter, welcher insbesondere als konstanter, dem Modell bekannter Wert berücksichtigt wird oder geschätzt und/oder berechnet wird, und

e) die Spurbreite jeder Achse des Fahrzeugs und/oder den Radstand zwischen den Achsen des Fahrzeugs.

Besonders bevorzugt ist die Fahrzeugmodelleinheit so ausgebildet, dass sie bei ihrer Berechnung mindestens eine der folgenden physikalische Größen und/oder Parameter berücksichtigt

f) den Schräglaufwinkel jeden Rades, insbesondere aus der Querbeschleunigung, also der Beschleunigung in Richtung der zweiten definierten Achse, berechnet und/oder

g) den Radschlupf, insbesondere aus Radkräften und/oder Beschleunigungen der jeden Rades berechnet.

Es ist bevorzugt, dass die Signalverarbeitungseinrichtung eine Reifenparameterschätzungseinheit umfasst, welche so ausgebildet ist, dass sie zumindest den Halbmesser, insbesondere den dynamischen Halbmesser, jeden Rades oder eine davon abhängige oder abgeleitete Größe berechnet und/oder schätzt und der Fahrzeugmodelleinheit als zusätzliche Eingangsgröße bereitstellt.

Besonders bevorzugt ist die Reifenparameterschätzungseinheit so ausgebildet, dass sie zusätzlich die Schräglaufsteifigkeit und
die Schlupfsteifigkeit bzw. Längsschlupfsteifigkeit jeden Rades oder eine davon abhängige oder abgeleitete Größe berechnet und/oder schätzt und der Fahrzeugmodelleinheit als zusätzliche Eingangsgröße bereitstellt, wobei die Reifenparameterschätzungseinheit so ausgebildet ist, dass sie insbesondere ein im Wesentlichen lineares Reifenmodell zur Berechnung der Rad-/Reifengrößen verwendet.

Zweckmäßigerweise ist die Reifenparameterschätzungseinheit so ausgebildet, dass sie als Eingangsgrößen die Raddrehzahlen und den Lenkwinkel erhält, zumindest teilweise oder vollständig die Ausgangsgrößen bzw. -werte der Strapdown-Algorithmus-Einheit, insbesondere die von ihr bereitgestellten Varianzen zusätzlich zu den Werten der physikalischen Größen, sowie die Varianzen des Fusionsfilters, zu den physikalischen Größen, welche die Eingangsgrößen der Reifenparameterschätzungseinheit sind.

Die Fahrzeugmodelleinheit ist so ausgebildet, dass sie zu jeder ihrer drei berechneten Größen der Geschwindigkeit entlang einer ersten definierten Achse, der Geschwindigkeit entlang einer zweiten definierten Achse sowie der Drehrate um eine dritte definierte Achse, eine Information über die Datenqualität berechnet und als zusätzliche Ausgabegröße bereitstellt, jeweils eine Varianz, und die Fahrzeugmodelleinheit so ausgebildet ist, dass sie auf Basis der berechneten Varianzen die Gültigkeit ihrer eigenen Ausgabegrößen bewertet, und dabei die jeweilige Varianz der Geschwindigkeit entlang der ersten und entlang der zweiten definierten Achse sowie der Drehrate um die dritte definierte Achse bei der Bewertung der Gültigkeit der eigenen Ausgabegrößen berücksichtigt, wobei die Fahrzeugmodelleinheit so ausgebildet ist, dass sie die jeweilige Varianz ihrer drei Ausgabegrößen bezüglich der Überschreitung eines oder jeweils eines definierten Grenzwerts prüft, wobei im Fall der Überschreitung einer oder mehrerer der Varianzen keine Gültigkeit der aktuellen Ausgabegrößen der Fahrzeugmodelleinheit gegeben ist.

Es ist bevorzugt, dass die Fahrzeugmodelleinheit und/oder die Reifenparameterschätzungseinheit so ausgebildet sind, dass diese zumindest eine Linearisierung umfassen. Diese Linearisierung wird insbesondere nur durchgeführt bzw. weist den Randparameter auf, dass die Gesamtbeschleunigung des Fahrzeugs, also die Beschleunigung bezüglich aller drei definierter Achsen, betraglich kleiner als 5 m/s$^2$ ist.

Es ist zweckmäßig, dass die erste, zweite und dritte definite Achse bezogen auf ein Koordinatensystem des Fahrzeugs, in dem das Sensorsystem implementiert ist, wie folgt definiert sind:

die erste definierte Achse entspricht der Längsachse des Fahrzeugs,
die zweite definierte Achse entspricht der Querachse des Fahrzeugs und
die dritte definierte Achse entspricht der Hochachse des Fahrzeugs. Diese drei Achsen bilden insbesondere ein kartesisches Koordinatensystem, insbesondere ein Fahrzeugkoordinatensystem.

Es ist bevorzugt, dass die Fahrzeugmodelleinheit so ausgebildet ist, dass sie eine direkte oder indirekte Messung der Radlasten und/oder Radaufstandskräfte durchführt oder unterstützt und diese wenigstens Größe als Ausgangsgröße bzw. Ausgabegröße bereitstellt.

Es ist zweckmäßig, dass die Fahrzeugmodelleinheit so ausgebildet ist, dass sie die Modellierung einer Radaufhängung, hinsichtlich eines kinematischen und/oder dynamischen Modells, umfasst, wodurch unter Berücksichtigung dieser Modellierung ein Lenkwinkel mit gesteigerter Genauigkeit berechnet wird bzw. werden kann. Dieser Lenkwinkel bezieht sich insbesondere auf den Lenkwinkel jeden Rades, der jeweils zur weiteren Berechnung der Ausgabegrößen bzw. Ausgangsgrößen der Fahrzeugmodelleinheit genutzt wird.

Der Lenkwinkel der Hinterräder wird zweckmäßigerweise erfasst über wenigstens ein zusätzliches Hinterradlenkwinkelsensorelement. Insbesondere zusätzlich oder alternativ vorzugsweise stellt die Aktorik einer Hinterachslenkung den Lenkwinkel der Räder der Hinterachse bereit.

Die Signalverarbeitungseinrichtung des Sensorsystems umfasst außerdem vorzugsweise ein Fusionsfilter. Das Fusionsfilter stellt im Zuge der gemeinsamen Auswertung zumindest der Sensorsignale und/oder daraus abgeleiteter Signale der Sensorelemente, also der Odometrie, und insbesondere zusätzlich der Ausgangssignale eines Satellitennavigationssystems und/oder daraus abgeleiteter Signale einen definierten Fusionsdatensatz bereit. Dieser Fusionsdatensatz weist jeweils Daten zu definierten physikalischen Größen auf, wobei der Fusionsdatensatz zu wenigstens einer physikalischen Größe einen Wert dieser physikalischen Größe und eine Information über deren Datenqualität umfasst, wobei diese Information über die Datenqualität beispielgemäß als Varianz ausgeprägt ist.

Vorzugsweise umfasst der Fusionsdatensatz als Wert der wenigstens einen physikalischen Größe einen relativen Wert, beispielhaft einen Korrekturwert, auch Offsetwert oder Änderungswert oder Fehlerwert genannt.

Die relativen Werte der jeweiligen physikalischen Größen des Fusionsdatensatzes sind also zweckmäßigerweise Korrekturwerte und Varianzen.

Die Werte der physikalischen Größen des Fusionsdatensatzes werden bevorzugt auf direkter bzw. indirekter Basis der Sensorsignale der Sensorelemente und des Satellitennavigationssystems berechnet, wobei wenigstens einige Größen, beispielsweise die Geschwindigkeit und die Position des Fahrzeugs bezüglich der Fahrzeugkoordinaten redundant erfasst werden und verwertet werden.

Das Fusionsfilter ist zweckmäßigerweise als Error State Space Extended Sequential Kalman Filter ausgebildet, also als Kalman Filter, das insbesondere eine Linearisierung umfasst und in welchem die Korrekturwerte berechnet und/oder geschätzt werden und welches sequentiell arbeitet und dabei die in dem jeweiligen Funktionsschritt der Sequenz verfügbaren Eingangsdaten verwendet/berücksichtigt.

Die Fahrzeugmodelleinheit stellt ihre Ausgabegrößen bzw. Ausgangsdaten, also wenigstens die Geschwindigkeit entlang einer ersten definierten Achse, die Geschwindigkeit entlang einer zweiten definierten Achse sowie die Drehrate um eine dritte definierte Achse bevorzugt dem Fusionsfilter bereit, welches diese Ausgabegrößen bzw. Ausgangsdaten der Fahrzeugmodelleinheit bei ihren Berechnungen, also den Berechnungen des Fusionsfilters, berücksichtigt bzw. verwendet.

Der dynamische Halbmesser jeden Rades bzw. der dynamische Reifenhalbmesser $r_{dyn}$ ist bevorzugt wie folgt definiert: Effektiv zurückgelegte Strecke bei einer Reifenumdrehung. Diese entspricht nicht dem Radius des Reifens, da sich durch Einfederung unter Last der Reifenradius effektiv verkleinert. Einflussgrößen, die den Reifenhalbmesser auch während einer Fahrt verändern können, sind z.B. Fahrgeschwindigkeit, Luftdruck und Temperatur.

Die Größe Längsschlupf $\lambda$ ist zweckmäßigerweise wie folgt definiert: Unter Längskrafteinfluss entsteht durch die Verformung der Profilelemente des Reifens, ohne Berücksichtigung eines Gleitens des Reifens auf der Straße, eine Schlupfbewegung. Diese hat zur Folge, dass sich der Reifen, abhängig von der Längskraft, schneller oder langsamer dreht, als dies über den Reifenhalbmesser zu erwarten wäre. Wie stark dieser Effekt ausgeprägt ist, wird hauptsächlich von der Gummimischung und dem Reifentyp beeinflusst, und wird durch die Längsschlupfsteifigkeit charakterisiert:

$$c_\lambda = \frac{F_x}{\lambda}$$

Der Schräglauf bzw. Schräglaufwinkel $\alpha$ ist vorzugsweise wie folgt definiert: Ähnlich wie beim Längsschlupf verursachen Seitenkräfte, senkrecht zur Rollrichtung, durch die Gummielastizität eine Seitwärtsbewegung des Reifens. Dieser Zusammenhang wird durch die Schräglaufsteifigkeit charakterisiert:

$$c_\alpha = \frac{F_y}{\alpha}$$

Zur Kompensation dieser Störgrößen wird von der Fahrzeugmodelleinheit bevorzugt auf ein lineares Reifenmodell der Reifenparameterschätzungseinheit zurückgegriffen bzw. in die Berechnungen mit einbezogen. Dieses beschränkt sich insbesondere auf Beschleunigungen bzw. Gesamtbeschleunigungen des Fahrzeugs $< 5\,\frac{m}{s^2}$. In diesem Bereich wird besonders bevorzugt angenommen, insbesondere als Modellannahme für die Berechnung, dass der Zusammenhang zwischen Längsschlupf und Schräglauf und den zugehörigen Kräften linear ist, und dass die übertragbaren Kräfte linear mit der Aufstandskraft $F_N$ bzw. Normalkraft auf den Reifen steigen. Dies erlaubt durch Kürzen der Fahrzeugmasse eine Normierung der Größen auf Beschleunigungen. Hierbei sind zweckmäßigerweise die Fahrzeugmassen und Beschleunigungen auf einzelne Räder bezogen, jedoch als statisch verteilt angenommen:

$$r_{dyn} = \frac{2\pi \cdot \Delta\varphi_{Rad}}{s_{x,absolut,Reifen}}$$

$$\lambda = \frac{F_x}{F_N \cdot c_\lambda} = \frac{m_{Fzg} \cdot a_{x,Fzg}}{m_{Fzg} \cdot g \cdot c_\lambda} = \frac{a_{x,Fzg}}{g \cdot c_\lambda}$$

$$\alpha = \frac{F_y}{F_N \cdot c_\alpha} = \frac{m_{Fzg} \cdot a_{y,Fzg}}{m_{Fzg} \cdot g \cdot c_\alpha} = \frac{a_{y,Fzg}}{g \cdot c_\alpha}$$

Dabei gilt vorzugsweise:

$\Delta\varphi_{Rad}$: Aus Wheelticks gemessener Drehwinkel des Rades

$s_{x,absolut,Reifen}$: Tatsächlich über der Straße zurückgelegte Strecke

$g$: Erdbeschleunigung

Daraus folgt für die zurückgelegten Strecken bevorzugt:

$$\Delta_{x,Rad} = \frac{2\pi \cdot \Delta\varphi_{Rad}}{r_{dyn}} \cdot \frac{1 - \lambda_a}{1 + \lambda_b}$$

$$\Delta_{y,Rad} = \Delta_{x,Rad} \cdot \tan \propto$$

Dabei gilt vorzugsweise:

$\lambda_a$: Antriebsschlupf beim Beschleunigen.
$\lambda_a$: Bremsschlupf beim Verzögern

Beispielgemäß ist daher, die jeweils in der Fahrsituation nicht zutreffende Schlupfgröße = 0.

Da die verwendeten Beschleunigungen aus der Navigationsrechnung bekannt sind, lässt sich vorzugsweise bei bekanntem Reifenhalbmesser und bekannter Schräglauf- und Längsschlupfsteifigkeit die tatsächliche ebene Bewegung des Fahrzeuges über der Fahrbahn modellbasiert abschätzen. Über den gemessenen Lenkradwinkel und die bekannte Lenkübersetzung wird eine mögliche Verdrehung von Reifenkoordinaten relativ zu den Fahrzeugkoordinaten zweckmäßigerweise berücksichtigt.

Die Strecken und Geschwindigkeiten der einzelnen Räder werden bevorzugt wie folgt in der Fahrzeugmodelleinheit berechnet:

- Berechnung von Beschleunigungen und Drehraten im Fahrzeugschwerpunkt
- Transformation auf Reifenkoordinaten
- Berechnung der Geschwindigkeiten / Strecken unter Verwendung des Reifenmodells und der Raddrehimpulse bzw. Raddrehzahlen
- Rücktransformation in Fahrzeugkoordinaten

Vorzugsweise stehen nach Abschluss dieser Schritte pro Rad zwei Messgrößen, ($\Delta X_{Rad}$, $\Delta Y_{Rad}$ in Fahrzeugkoordinaten), also insgesamt acht Messwerte zur Verfügung.

Es ist bevorzugt, dass die Reifenparameterschätzungseinheit so ausgebildet ist, dass sie ein Verfahren zum Schätzen von Reifenparametern für ein Fahrzeug durchführt, umfassend die folgenden Schritte:

- Messen einer Referenzbewegung des Fahrzeuges;
- Modellieren einer Modellbewegung des Fahrzeuges basierend auf einem von den zu schätzenden Reifenparametern befreiten Modell; und
- Schätzen der Reifenparameter des Fahrzeuges basierend auf einer Gegenüberstellung der Referenzbewegung und der Modellbewegung.

Das Verfahren umfasst insbesondere zusätzlich folgenden Schritt:

- Erfassen der realen Geschwindigkeit des Fahrzeuges an Radaufstandspunkten des Fahrzeuges.

Es ist bevorzugt, dass das Verfahren folgenden Schritt umfasst:

- Aufstellen des von den zu schätzenden Reifenparametern befreiten Modells basierend auf angenäherten Reifenparametern.

Und insbesondere den weiteren Schritt:

- Verwenden der geschätzten Reifenparameter als angenäherte Reifenparameter in dem Modell, zum Schätzen neuer Reifenparameter.

Zweckmäßigerweise umfasst das Verfahren folgende Schritte:

- Erfassen einer Varianz der Referenzbewegung, und
- Schätzen der Reifenparameter des Fahrzeuges basierend auf der erfassten Varianz.

Das Verfahren ist vorzugsweise weitergebildet, dadurch, dass die geschätzten Reifenparameter des Fahrzeuges als gültig betrachtet werden, wenn die Referenzbewegung und/oder die Modellbewegung einen bestimmten Wert überschreiten.

Das Verfahren umfasst zweckmäßigerweise den Schritt:

- Gegenüberstellen der Referenzbewegung und der Modellbewegung basierend auf einem Beobachter.

Bezüglich des Verfahrens in der Reifenparameterschätzungseinheit der Beobachter bevorzugt ein Kalman-Filter.

Es ist bevorzugt, dass die Signalverarbeitungseinrichtung ein Fusionsfilter aufweist, welches im Zuge der gemeinsamen Auswertung zumindest der Sensorsignale und/oder daraus abgeleiteter Signale der Sensorelemente einen definierten Fusionsdatensatz bereitstellt, wobei dieser Fusionsdatensatz jeweils Daten zu definierten physikalischen Größen aufweist, wobei der Fusionsdatensatz zu wenigstens einer physikalischen Größe einen Wert dieser physikalischen Größe und eine Information über deren Datenqualität umfasst.

Das Fusionsfilter ist bevorzugt als Kalmanfilter ausgebildet, alternativ vorzugsweise als Partikelfilter, oder alternativ als Informationsfilter oder alternativ als "Unscented" Kalmanfilter.

Es ist bevorzugt, dass das Fusionsfilter so ausgebildet ist, dass der Fusionsdatensatz als Wert der wenigstens einen physikalischen Größe einen relativen Wert umfasst, insbesondere einen Offsetwert und/oder Änderungswert und/oder Korrekturwert und/oder Fehlerwert.

Es ist zweckmäßig, dass der die relativen Werte der jeweiligen physikalischen Größen des Fusionsdatensatzes Korrekturwerte sind, denen jeweils eine Streuungsinformation bzw. Streuung bzw. Streuungsmaß, insbesondere eine Varianz, als Information über deren Datenqualität zugeordnet sind.

Es ist bevorzugt, dass das Fusionsfilter so ausgebildet ist, dass der Wert wenigstens einer physikalischen Größe des Fusionsdatensatzes auf direkter oder indirekter Basis von Sensorsignalen mehrerer Sensorelemente berechnet wird, wobei diese Sensorelemente diese wenigstens eine physikalische Größe redundant in direkter oder indirekter Weise erfassen. Diese redundante Erfassung ist besonders bevorzugt direkte bzw. parallele Redundanz verwirklicht und/oder als analytische Redundanz verwirklicht, aus rechnerisch abgeleiteten bzw. hergeleiteten Größen/Werten und/oder Modellannahmen.

Das Fusionsfilter ist bevorzugt als Kalmanfilter ausgebildet, das iterativ wenigstens Prädiktionsschritte sowie Korrekturschritte durchführt und zumindest teilweise den Fusionsdatensatz bereitstellt. Insbesondere ist das Fusionsfilter als Error State Space Extended Sequential Kalman Filter ausgebildet, also als Kalman Filter, das besonders bevorzugt eine Linearisierung umfasst und in welchem Fehlerzustandsinformationen berechnet und/oder geschätzt werden und/oder welches sequenziell arbeitet und dabei die in dem jeweiligen Funktionsschritt der Sequenz verfügbaren Eingangsdaten verwendet/berücksichtigt.

Es ist zweckmäßig, dass das Sensorsystem eine Inertialsensoranordnung aufweist, umfassend wenigstens ein Beschleunigungssensorelement und zumindest ein Drehratensensorelement, und dass das Sensorsystem eine Strapdown-Algorithmus-Einheit umfasst, in welcher ein Strapdown-Algorithmus durchgeführt wird, mit dem wenigstens die Sensorsignale der Inertialsensoranordnung zu, insbesondere korrigierten, Navigationsdaten und/oder Fahrdynamikdaten verarbeitet werden, bezogen auf das Fahrzeug, in welchem das Sensorsystem angeordnet ist.

Es ist besonders bevorzugt, dass die Strapdown-Algorithmus-Einheit ihre berechneten Navigationsdaten und/oder Fahrdynamikdaten dem Fusionsfilter direkt oder indirekt bereitstellt.

Das Sensorsystem weist vorzugsweise eine Inertialsensoranordnung auf, welche so ausgebildet ist, dass sie zumindest die Beschleunigung entlang einer zweiten definierten Achse, insbesondere der Querachse des Fahrzeugs, und wenigstens die Drehrate um eine dritte definierte Achse, insbesondere der Hochsachse des Fahrzeugs, erfassen kann, wobei die erste und die dritte definierte Achse ein Erzeugendensystem bilden, und dabei insbesondere senkrecht zueinander ausgerichtet sind, wobei das Sensorsystem außerdem mindestens ein Raddrehzahlsensorelement, insbesondere zumindest oder genau vier Raddrehzahlsensorelemente aufweist, welche die Raddrehzahl eines Rades oder die Raddrehzahlen jeweils eines der Räder des Fahrzeugs erfassen und insbesondere zusätzlich die Drehrichtung des zugeordneten Rades des Fahrzeugs erfassen, in dem das Sensorsystem angeordnet ist,

wobei das Sensorsystem zusätzlich wenigstens ein Lenkwinkelsensorelement umfasst, welches den Lenkwinkel des Fahrzeugs erfasst und

wobei das Sensorsystem darüber hinaus ein Satellitennavigationssystem umfasst, welches insbesondere so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt.

Besonders bevorzugt ist die Inertialsensoranordnung so ausgebildet, dass sie zumindest die Beschleunigungen entlang einer ersten, einer zweiten und einer dritten definierte Achse und wenigstens die Drehraten um diese erste, um diese zweite und um diese dritte definierte Achse erfassen kann, wobei diese erste, zweite und dritte definierte Achse ein Erzeugendensystem bilden, und dabei insbesondere jeweils senkrecht zueinander ausgerichtet sind.

Es ist bevorzugt, dass die Inertialsensoranordnung ihre Sensorsignale der Strapdown-Algorithmus-Einheit bereitstellt und die Strapdown-Algorithmus-Einheit so ausgebildet ist, dass sie zumindest

aus den Sensorsignalen der Inertialsensoranordnung sowie insbesondere wenigstens einer Fehlerzustandsinformation und/oder Varianz und/oder Information über die Datenqualität, die einem Sensorsignal oder einer physikalischen Größe zugeordnet ist und von dem Fusionsfilter bereitgestellt wird,

als Messgrößen und/oder Navigationsdaten und/oder Fahrdynamikdaten

mindestens korrigierte Beschleunigungen entlang der ersten, der zweiten und der dritten definierten Achse,

wenigstens korrigierte Drehraten um diese drei definierten Achsen,

wenigstens eine Geschwindigkeit bezüglich dieser drei definierten Achsen

sowie zumindest eine Positionsgröße

berechnet und/oder bereitstellt.

Es ist zweckmäßig, dass das Sensorsystem so ausgebildet ist, dass jeweils zumindest ein Sensorsignal und/oder eine physikalische Größe als direkte oder abgeleitete Größe der Inertialsensoranordnung und/oder der Strapdown-Algorithmus-Einheit,

der Raddrehzahlsensorelemente und des Lenkwinkelsensorelements, insbesondere indirekt über eine Fahrzeugmodelleinheit,

sowie des Satellitennavigationssystems, dabei insbesondere Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe,

dem Fusionsfilter bereitstellt und vom Fusionsfilter bei dessen Berechnungen berücksichtigt werden.

Es ist besonders bevorzugt, dass die Fahrzeugmodelleinheit so ausgebildet ist, dass aus den Sensorsignalen der Raddrehzahlsensorelemente und des Lenkwinkelsensorelements die Geschwindigkeit entlang der ersten definierten Achse, die Geschwindigkeit entlang der zweiten definierten Achse sowie die Drehrate um die dritte definierte Achse berechnet werden.

Es ist ganz besonders bevorzugt, dass die Fahrzeugmodelleinheit so ausgebildet ist, dass sie zur Berechnung ein Verfahren der kleinsten Fehlerquadrate zur Lösung eines überbestimmten Gleichungssystems, insbesondere als Least-Squared-Error-Verfahren bekannt, verwendet.

Es ist zweckmäßig, dass die Fahrzeugmodelleinheit so ausgebildet ist, dass sie bei ihrer Berechnung mindestens folgende physikalische Größen und/oder Parameter berücksichtigt

> a) den Lenkwinkel jedes Rades, insbesondere durch den Lenkwinkelsensor für die beiden Vorderräder erfasst, wobei die Modellannahme getroffen wird, dass der Lenkwinkel der Hinterräder gleich Null ist oder dass der Lenkwinkel der Hinterräder zusätzlich erfasst wird,
> b) die Raddrehzahl oder eine davon abhängige Größe jeden Rades,
> c) die Drehrichtung jeden Rades,
> d) der dynamische Halbmesser und/oder Raddurchmesser jeden Rades und
> e) die Spurbreite jeder Achse des Fahrzeugs und/oder den Radstand zwischen den Achsen des Fahrzeugs.

Die Signalverarbeitungseinrichtung ist vorzugsweise so ausgebildet, dass das Fusionsfilter den Fusionsdatensatz zu definierten Zeitpunkten berechnet und/oder bereitstellt und/oder ausgibt.

Das Fusionsfilter ist bevorzugt so ausgebildet, dass es den Fusionsdatensatz unabhängig von den Abtastraten und/oder Sensorsignalausgabezeitpunkten der Sensorelemente, insbesondere der Raddrehzahlsensorelemente und des Lenkwinkelsensorelements, und unabhängig von zeitlichen Signal- oder Messgrößen-/ oder Informationsausgabezeitpunkten des Satellitennavigationssystems, berechnet und/oder bereitstellt und/oder ausgibt.

Es ist zweckmäßig, dass die Signalverarbeitungseinrichtung so ausgebildet ist, dass im Zuge eines Funktionsschritts des Fusionsfilters stets, insbesondere asynchron, die neuesten, dem Fusionsfilter verfügbaren Informationen und/oder Signale und/oder Daten der Sensorelemente, insbesondere der Raddrehzahlsensorelemente und des Lenkwinkelsensorelements, direkt oder indirekt, insbesondere mittels der Fahrzeugmodelleinheit und des Satellitennavigationssystems direkt oder indirekt, sequenziell aktualisiert und/oder in das Fusionsfilter aufgenommen werden und bei der Berechnung des zugeordneten Funktionsschritts des Fusionsfilters berücksichtigt werden.

Es ist bevorzugt, dass das Sensorsystem eine Stillstandserkennungseinheit aufweist, welche so ausgebildet ist, dass sie einen Stillstand des Fahrzeugs erkennen kann und im Fall eines erkannten Stillstands des Fahrzeugs zumindest dem Fusionsfilter Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen.

Es ist bevorzugt, dass die Signalverarbeitungseinrichtung eine erste Gruppe von Daten physikalischer Größen berechnet und/oder verwendet, deren Werte sich auf ein Fahrzeugkoordinatensystem beziehen und wobei die Signalverarbeitungseinrichtung zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit aufweist, mit welcher der Ausrichtungswinkel zwischen dem Fahrzeugkoordinatensystem und dem Weltkoordinatensystem berechnet wird, wobei der Ausrichtungswinkel zwischen dem Fahrzeugkoordinatensystem und dem Weltkoordinatensystem in der Ausrichtungsmodelleinheit berechnet wird zumindest auf Basis folgender Größen: die Geschwindigkeit bezüglich des Fahrzeugkoordinatensystems, die Geschwindigkeit bezüglich des Weltkoordinatensystems und insbesondere der Lenkwinkel.

Es ist zweckmäßig, dass die folgenden Begriffe synonym verwendet werden, also technisch umgesetzt dasselbe bedeuten: Offsetwert, Änderungswert, Korrekturwert und Fehlerwert.

Unter einer Fehlerzustandsinformation wird bevorzugt eine Fehlerinformation und/oder eine Fehlerkorrekturinformation und/oder eine Streuungsinformation und/oder eine Varianzinformation und/oder eine Genauigkeitsinformation verstanden.

Unter dem Begriff Varianz wird vorzugsweise der Begriff Streuung verstanden, wobei insbesondere im Fall eines allgemeinen Fusionsfilters, dieses jeweils eine Streuung bzw. einen Streuungswert jedem Wert einer physikalischen Größe des Fusionsfilters zuordnet, und im Fall eines Kalmanfilters als Fusionsfilters, jeweils eine Varianz jedem Wert einer physikalischen Größe des Fusionsfilters zuordnet wird/ist.

Es ist zweckmäßig, dass die erste, zweite und dritte definite Achse bezogen auf ein Koordinatensystem des Fahrzeugs, in dem das Sensorsystem implementiert ist, wie folgt definiert sind:

> die erste definierte Achse entspricht der Längsachse des Fahrzeugs,
> die zweite definierte Achse entspricht der Querachse des Fahrzeugs und

die dritte definierte Achse entspricht der Hochachse des Fahrzeugs. Diese drei Achsen bilden insbesondere ein kartesisches Koordinatensystem.

Es ist bevorzugt, dass das Fusionsfilter so ausgebildet ist, dass seine Daten, insbesondere die physikalischen Größen bzw. die Daten der physikalischen Größen des Fusionsdatensatzes, in stets konstant große Blöcke aufgeteilt sind oder werden, welche in beliebiger Reihenfolge im Fusionsfilter iterativ verarbeitet werden, das Fusionsfilter führt also bezüglich seiner Eingangsdaten ein sequentielles Update durch. Dabei ist das Fusionsfilter besonders bevorzugt so ausgebildet, dass die Filtergleichungen angepasst werden, so dass das rechnerische Ergebnis des sequentiellen Updates in jeden Schritt des Fusionsfilters ein Update, also eine Datenaktualisierung, für sämtliche Messgrößen der Eingangsdaten des Fusionsfilters ist.

Das Sensorsystem ist zweckmäßigerweise in einem Fahrzeug, insbesondere einem Kraftfahrzeug, besonders bevorzugt einem Automobil, angeordnet.

Das Sensorsystem ist bevorzugt so ausgebildet, dass Daten des Satellitennavigationssystems, insbesondere Positionsdaten, eine Zeitstempelinformation zugeordnet wird, welche im Wesentlichen den Messzeitpunkt dieser Daten beschreibt. Die Zeitstempelinformation des jeweiligen Datums des Satellitennavigationssystems wird gemeinsam mit diesem jeweiligen Datum dem Fusionsfilter bereitgestellt und bei der internen Berechnung im Fusionsfilter berücksichtigt.

Bevorzugt wird außerdem den Daten weiterer oder sämtlicher Sensorelemente und/oder der Inertialsensoranordnung ebenfalls eine solche Zeitstempelinformation zugeordnet, die ebenfalls mit dem jeweiligen Datum dem Fusionsfilter bereitgestellt wird und bei der internen Berechnung im Fusionsfilter berücksichtigt wird. Zweckmäßigerweise wird bezüglich der Daten des Satellitennavigationssystems die jeweilige Zeitstempelinformation von dem Satellitennavigationssystem selbst erzeugt.

Es ist bevorzugt, dass bei den zusätzlichen Zeitstempelinformationen der weiteren Sensorelemente und/oder der Inertialsensoranordnung die jeweilige Zeitstempelinformation von der Signalverarbeitungseinrichtung erzeugt wird, insbesondere in Abhängigkeit der Zeitmessung des Satellitennavigationssystems.

Vorzugsweise umfasst ein Funktionsschritt des Fusionsfilters wenigstens einen Prädiktionsschritt sowie einen Korrekturschritt. Das Fusionsfilter ist dabei iterativ ausgebildet und führt iterativ, nacheinander Funktionsschritte aus. Insbesondere werden innerhalb jedes Funktionsschritts des Fusionsfilters Daten bzw. Werte bzw. Signale eingelesen, also Eingangsdaten berücksichtigt, also auch Daten bzw. Werte bzw. Signale ausgegeben, also als Ausgangs-/ Ausgabedaten bereitgestellt.

Das Fusionsfilter ist vorzugsweise so ausgebildet, dass das Fusionsfilter mehrere Aktualisierungsschritte innerhalb eines Funktionsschritts durchführt, wobei diese Aktualisierungsschritte sich auf das Laden bzw. Verwenden bzw. Aktualisieren von Eingangsdaten bzw. -signalen bezieht. Das Fusionsfilter geht insbesondere sequentiell sämtliche Eingangsgrößen bzw. Eingangssignale durch und prüft jeweils ob neue Informationen/ Daten vorliegen. Falls ja werden diese in das Filter übernommen bzw. die Informationen/ Daten im Filter aktualisiert, falls nein bleibt der aktuelle Wert erhalten und das Filter prüft den nächsten Eingang bzw. die nächste Eingangsgröße bzw. das nächste Eingangssignal.

Die Strapdown-Algorithmus-Einheit stellt vorzugsweise zumindest absolute Werte physikalischer Größen bereit, insbesondere absolute Werte für die Beschleunigung, die Drehrate, die Geschwindigkeit, dabei jeweils bezogen auf die drei Achsen den Fahrzeug- und/oder Weltkoordinatensystem, sowie eine Position und den Ausrichtungswinkel. Die Werte zu diesen Größen werden dabei besonders bevorzugt alle von der Strapdown-Algorithmus-Einheit als korrigierte Werte/ Größen bereitgestellt.

Es ist zweckmäßig, dass die Inertialsensoranordnung das Fusionsfilter taktet und/oder triggert, insbesondere wird jeder Fusionsschritt, der vom Fusionsfilter ausgeführt wird, von der Inertialsensoranordnung bzw. wenigstens einem Ausgangssignal bzw. Ausgangsdatum getriggert.

Es ist bevorzugt, dass die Strapdown-Algorithmus-Einheit so ausgebildet ist, dass sie einen Startvektor physikalischer Größen aufweist und/oder einen Startwert der Position, insbesondere bezüglich des Starts des Sensorsystems, besonders bevorzugt nach jedem Einschalten des Sensorsystems. Diesen Startvektor und/oder diese Startposition erhält die Strapdown-Algorithmus-Einheit besonders bevorzugt über das Fusionsfilter von dem Satellitennavigationssystem.

Es ist zweckmäßig, dass die Daten des Fusionsfilters, insbesondere dessen Fusionsdatensatz, einen virtuellen Sensor abbilden bzw. einem solchen entsprechen.

Unter dem Begriff Sensorelemente werden bevorzugt die Raddrehzahlsensorelemente, das wenigstens eine Lenkwinkelsensorelement, die Sensorelemente der Inertialsensoranordnung und insbesondere zusätzlich auch das Satellitennavigationssystem verstanden.

Es ist bevorzugt, wenn allgemein eine Größe und/oder Wert hinsichtlich der drei definierten Achsen angegeben wird, dass dies bezüglich des Fahrzeugkoordinatensystems und/oder des Weltkoordinatensystems gemeint ist.

Es ist zweckmäßig, dass der Fusionsdatensatz, der Werte der physikalischen Größen umfasst, einen relativen Wert, beispielhaft einen Korrekturwert, auch Offsetwert genannt, umfasst und insbesondere der Strapdown-Algorithmus-Einheit bereitstellt. Beispielgemäß ergibt sich dieser jeweilige Korrekturwert jeweils aus den kumulierten Fehlerwerten bzw. Änderungswerten, die vom Fusionsfilter bereitgestellt werden.

Die Erfindung bezieht sich außerdem auf die Verwendung des Sensorsystems in Fahrzeugen, insbesondere Kraftfahrzeugen, besonders bevorzugt in Automobilen.

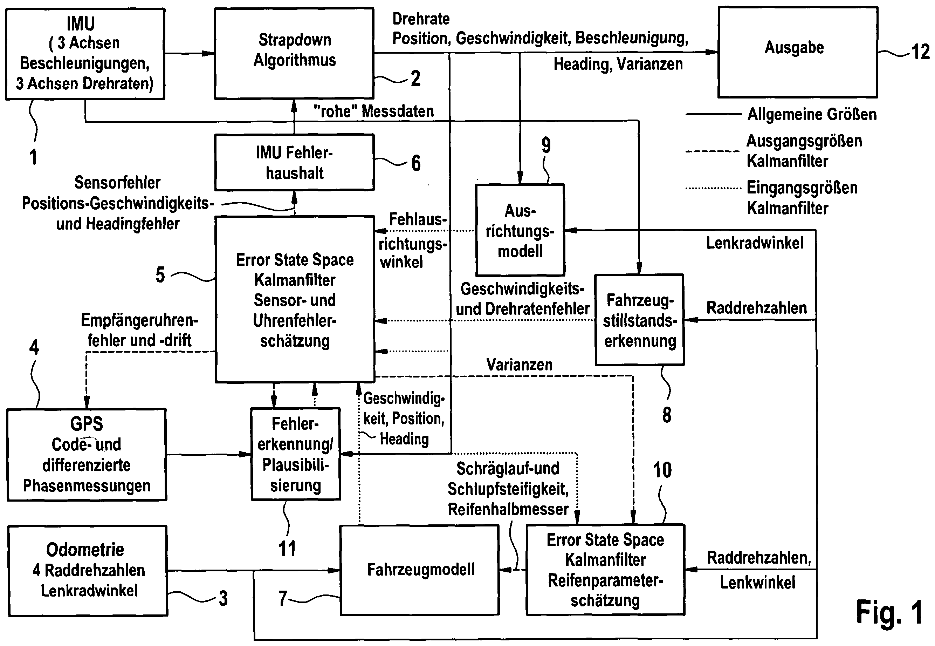

Weitere bevorzugte Ausführungsformen ergeben sich aus den Unteransprüchen und der nachfolgenden Beschreibung eines Ausführungsbeispiels an Hand von Fig. 1.

Fig. 1 zeigt in schematischer Darstellung ein Ausführungsbeispiel des Sensorsystems, das zur Anordnung und Verwendung in einem Fahrzeug vorgesehen ist. Dabei sind die Sensorelemente und das Satellitennavigationssystem sowie die wichtigsten Signalverarbeitungseinheiten der Signalverarbeitungseinrichtung als Funktionsblöcke veranschaulicht und deren Zusammenwirken untereinander.

Das Sensorsystem umfasst eine Inertialsensoranordnung 1, IMU, "inertial measurement unit", die so ausgebildet ist, dass sie zumindest die Beschleunigungen entlang einer ersten, einer zweiten und einer dritten definierte Achse und wenigstens die Drehraten um diese erste, um diese zweite und um die dritte definierte Achse erfassen kann, wobei die erste definierte Achse der Längsachse des Fahrzeugs entspricht, die zweite definierte Achse der Querachse des Fahrzeugs entspricht und die dritte definierte Achse der Hochachse des Fahrzeugs entspricht. Diese drei Achsen bilden ein kartesisches Koordinatensystem, das Fahrzeugkoordinatensystem.

Das Sensorsystem weist eine Strapdown-Algorithmus-Einheit 2 auf, in welcher ein Strapdown-Algorithmus durchgeführt wird, mit dem wenigstens die Sensorsignale der Inertialsensoranordnung 1 zu korrigierten, Navigationsdaten und/oder Fahrdynamikdaten verarbeitet werden. Diese Ausgangsdaten der Strapdown-Algorithmus-Einheit 2 umfassen die Daten folgender physikalischer Größen:

die Geschwindigkeit, die Beschleunigung sowie die Drehrate jeweils des Fahrzeugs, beispielhaft bezüglich der drei Achsen des Fahrzeugkoordinatensystems und beispielgemäß zusätzlich jeweils bezogen auf ein Weltkoordinatensystem, das zur Beschreibung der Ausrichtung und/oder von dynamischen Größen des Fahrzeugs auf der Welt geeignet ist. Außerdem umfassen die Ausgangsdaten der Strapdown-Algorithmus-Einheit 2 die Position bezüglich des Fahrzeugkoordinatensystems und die Ausrichtung hinsichtlich des Weltkoordinatensystems. Zusätzlich weisen die Ausgangsdaten der Strapdown-Algorithmus-Einheit die Varianzen als Information über die Datenqualität der obig genannten physikalischen Größen auf, zumindest einiger davon. Diese Varianzen werden beispielgemäß nicht in der Strapdown-Algorithmus-Einheit berechnet, sondern nur von dieser verwendet und weitergeleitet.

Die Ausgangsdaten der Strapdown-Algorithmus-Einheit sind beispielhaft außerdem die Ausgangsdaten bzw. -signale bzw. Ausgabedaten 12 des gesamten Sensorsystems.

Das Sensorsystem umfasst außerdem Raddrehzahlsensorelemente 3 für jedes Rad des Fahrzeugs, beispielgemäß vier, welche die Raddrehzahlen jeweils eines der Räder des Fahrzeugs erfassen und jeweils zusätzlich die Drehrichtung erfassen, und zusätzlich ein Lenkwinkelsensorelement 3, das den Lenkwinkel des Fahrzeugs erfasst. Die Raddrehzahlsensorelement und das Lenkwinkelsensorelement bilden eine Sensoranordnung 3 zur Erfassung der Odometrie.

Darüber hinaus weist das Sensorsystem ein Satellitennavigationssystem 4 auf, welches so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt. Zusätzlich stellt das Satellitennavigationssystem 4 beispielgemäß dem Fusionsfilter eine Startposition bzw. Startpositionsinformation bereit, zumindest zum Start oder Einschalten des Sensorsystems.

Die Signalverarbeitungseinrichtung des Sensorsystems umfasst außerdem ein Fusionsfilter 5. Das Fusionsfilter 5 stellt im Zuge der gemeinsamen Auswertung zumindest der Sensorsignale und/oder daraus abgeleiteter Signale der Sensorelemente 3, also der Odometrie, und der Ausgangssignale des Satellitennavigationssystems 4 und/oder daraus abgeleiteter Signale einen definierten Fusionsdatensatz 6 bereit. Dieser Fusionsdatensatz weist jeweils Daten zu definierten physikalischen Größen auf, wobei der Fusionsdatensatz 6 zu wenigstens einer physikalischen Größe einen Wert dieser physikalischen Größe und eine Information über deren Datenqualität umfasst, wobei diese Information über die Datenqualität beispielgemäß als Varianz ausgeprägt ist.

Der Fusionsdatensatz 6 umfasst als Wert der wenigstens einen physikalischen Größe einen relativen Wert, beispielhaft einen Korrekturwert, auch Offsetwert genannt. Beispielgemäß ergibt sich der Korrekturwert jeweils aus den kumulierten Fehlerwerten bzw. Änderungswerten, die vom Fusionsfilter 5 bereitgestellt werden.

Die relativen Werte der jeweiligen physikalischen Größen des Fusionsdatensatzes 6 sind also beispielgemäß Korrekturwerte und Varianzen. Der Fusionsdatensatz 6 berechnet beispielgemäß, anders formuliert, einen Fehlerhaushalt, welcher als Eingangsgröße bzw. Eingangsdatensatz der Strapdown-Algorithmus-Einheit bereitgestellt wird und von dieser bei ihren Berechnungen zumindest teilweise berücksichtigt wird. Dieser Fehlerhaushalt umfasst als Datensatz bzw. Ausgangsdaten zumindest Korrekturwerte bzw. Fehlerwerte physikalischer Größen sowie jeweils eine Varianz, als Information über die Datenqualität, zu jedem Wert. Hierbei werden vom Fusionsfilter zumindest die Korrekturwerte und Varianzen zu den physikalischen Größen Geschwindigkeit, Beschleunigung und Drehrate, jeweils bezogen auf das Fahrzeugkoordinatensystem, also jeweils die drei Komponenten dieser Größen bezüglich dieses Koordinatensystems, sowie IMU-Ausrichtung bzw. der IMU-Ausrichtungswinkel zwischen Fahrzeugkoordinatensystem und dem Koordinatensystem bzw. der Einbauausrichtung der Inertialsensoranordnung 1 sowie die Position bezogen auf das Weltkoordinatensystem an die Strapdown-Algorithmus-Einheit übertragen.

Die Werte der physikalischen Größen des Fusionsdatensatzes werden auf direkter bzw. indirekter Basis der Sensorsignale der Sensorelemente 3 und des Satellitennavigationssystems 4 berechnet, wobei wenigstens einige Größen, beispielsweise die Geschwindigkeit und die Position des Fahrzeugs bezüglich der Fahrzeugkoordinaten redundant zu den Daten der Strapdown-Algorithmus-Einheit 2 erfasst werden und verwertet werden.

Das Fusionsfilter 5 ist als beispielgemäß als Error State Space Extended Sequential Kalman Filter ausgebildet ist, also als Kalman Filter, das insbesondere eine Linearisierung umfasst und in welchem die Korrekturwerte berechnet und/oder geschätzt werden und welches sequentiell arbeitet und dabei die in dem jeweiligen Funktionsschritt der Sequenz verfügbaren Eingangsdaten verwendet/berücksichtigt.

Das Fusionsfilter 5 ist so ausgebildet, dass im Zuge eines Funktionsschritts des Fusionsfilters stets, asynchron, die neuesten, dem Fusionsfilter verfügbaren Informationen und/oder Signale und/oder Daten der Sensorelemente 3, also der Raddrehzahlsensorelemente und des Lenkwinkelsensorelements indirekt mittels einer Fahrzeugmodelleinheit 7 und des Satellitennavigationssystems 4 direkt oder indirekt, sequenziell aktualisiert und/oder in das Fusionsfilter aufgenommen werden und bei der Berechnung des zugeordneten Funktionsschritts des Fusionsfilters 5 berücksichtigt werden.

Die Fahrzeugmodelleinheit 7 ist so ausgebildet, dass sie aus den Sensorsignalen der Raddrehzahlsensorelemente 3 und des Lenkwinkelsensorelements 3 zumindest die Geschwindigkeit entlang einer ersten definierten Achse, die Geschwindigkeit entlang einer zweiten definierten Achse sowie die Drehrate um eine dritte definierte Achse berechnet und dem Fusionsfilter 5 bereitstellt.

Das Sensorsystem weist beispielgemäß vier Raddrehzahlsensorelemente 3 auf, wobei jeweils eins der Raddrehzahlsensorelemente jedem Rad des Fahrzeugs zugeordnet ist, wobei die Fahrzeugmodelleinheit 7 so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das Lenkwinkelsensorelement für die Vorderräder und mittels wenigstens eines weiteren Lenkwinkelsensorelements für die Hinterräder oder zumindest aus einer Modellannahme für die Hinterräder, die Geschwindigkeitskomponenten und/oder die Geschwindigkeit, jedes Rades, entlang/bezüglich der ersten und der zweiten definierten Achse direkt oder indirekt berechnet, wobei aus diesen acht Geschwindigkeitskomponenten und/oder den vier Geschwindigkeiten jeweils bezüglich der ersten und zweiten definierten Achse, die Geschwindigkeit entlang einer ersten definierten Achse, die Geschwindigkeit entlang einer zweiten definierten Achse sowie die Drehrate um eine dritte definierte Achse berechnet wird.

Das Sensorsystem bzw. dessen Signalverarbeitungseinrichtung umfasst außerdem eine Reifenparameterschätzungseinheit 10, welche so ausgebildet ist, dass sie zumindest den Halbmesser, beispielgemäß den dynamischen Halbmesser, jeden Rades berechnet und zusätzlich die Schräglaufsteifigkeit und die Schlupfsteifigkeit jeden Rades berechnet und der Fahrzeugmodelleinheit 7 als zusätzliche Eingangsgrößen bereitstellt, wobei die Reifenparameterschätzungseinheit 10 so ausgebildet ist, dass sie ein im Wesentlichen lineares Reifenmodell zur Berechnung der Rad-/Reifengrößen verwendet. Die beispielgemäßen Eingangsgrößen der Reifenparameterschätzungseinheit sind dabei die Raddrehzahlen 3 und der Lenkwinkel 3, zumindest teilweise oder vollständig die Ausgangsgrößen bzw. -werte der Strapdown-Algorithmus-Einheit 2, insbesondere die von ihr bereitgestellten Varianzen zusätzlich zu den Werten der physikalischen Größen, sowie die Varianzen des Fusionsfilters 5, zu den physikalischen Größen, welche die Eingangsgrößen der Reifenparameterschätzungseinheit 10 sind.

Das Sensorsystem bzw. dessen Signalverarbeitungseinrichtung umfasst außerdem eine GPS-Fehlererkennungs-und-Plausibilisierungseinheit 11, welche so ausgebildet ist, dass sie beispielgemäß als Eingangsdaten die Ausgangsdaten bzw. Ausgangssignale des Satellitennavigationssystem 4 sowie zumindest teilweise die Ausgangsdaten bzw. Ausgangssignale der Strapdown-Algorithmus-Einheit 2 erhält und in ihren Berechnungen berücksichtigt

Dabei ist die GPS-Fehlererkennungs-und-Plausibilisierungseinheit 11 zusätzlich mit dem Fusionsfilter 5 verbunden und tauscht mit diesem Daten aus.

Die GPS-Fehlererkennungs-und-Plausibilisierungseinheit 11 ist beispielhaft so ausgebildet, dass sie folgendes Verfahren durchführt:

Verfahren zum Auswählen eines Satelliten, umfassend:

- Messen von Messlagedaten des Fahrzeuges gegenüber dem Satelliten basierend auf dem GNSS-Signal, also dem Globalen Navigationssatellitensystem-Signal, dem Ausgangssignal bzw. den Ausgangsdaten des Satellitennavigationssystems 4,

- Bestimmen von zu den basierend auf dem GNSS-Signal bestimmten Messlagedaten redundanten Referenzlagedaten des Fahrzeuges; und
- Auswählen des Satelliten, wenn eine Gegenüberstellung der Messlagedaten und der Referenzlagedaten einer vorbestimmten Bedingung genügt,
- wobei zur Gegenüberstellung der Messlagedaten und der Referenzlagedaten eine Differenz zwischen den Messlagedaten und den Referenzlagedaten gebildet wird,
- wobei die vorbestimmte Bedingung ein maximal zulässiger Fehler zwischen den Messlagedaten und den Referenzlagedaten ist,
- wobei der maximal zulässige Fehler von einer Standardabweichung abhängig ist, die basierend auf einer Summe aus einer Referenzvarianz für die Referenzlagedaten und einer Messvarianz für die Messlagedaten berechnet wird,
- wobei der maximal zulässige Fehler einem Vielfachen der Standardabweichung derart entspricht, dass eine Wahrscheinlichkeit, dass die Messlagedaten in ein von der Standardabweichung abhängiges Streuintervall einen vorbestimmten Schwellwert unterschreiten.

Das Sensorsystem bzw. dessen Signalverarbeitungseinrichtung weist außerdem eine Stillstandserkennungseinheit 8 auf, welche so ausgebildet ist, dass sie einen Stillstand des Fahrzeugs erkennen kann und im Fall eines erkannten Stillstands des Fahrzeugs zumindest dem Fusionsfilter 5 Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen. Die Stillstandserkennungseinheit 8 ist dabei beispielgemäß so ausgebildet, dass sie als Eingangsdaten die Raddrehzahlen bzw. Raddrehzahlsignale nutzt sowie die "rohen" bzw. direkten Ausgangssignale der Inertialsensoranordnung 1.

Die Signalverarbeitungseinrichtung berechnet und/oder verwendet beispielgemäß eine erste Gruppe von Daten physikalischer Größen, deren Werte sich auf ein Fahrzeugkoordinatensystem beziehen und zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit 9 aufweist, mit welcher der Ausrichtungswinkel zwischen dem Fahrzeugkoordinatensystem und dem Weltkoordinatensystem berechnet wird.

Der Ausrichtungswinkel zwischen dem Fahrzeugkoordinatensystem und dem Weltkoordinatensystem in der Ausrichtungsmodelleinheit 9 wird berechnet zumindest auf Basis folgender Größen:

die Geschwindigkeit bezüglich des Fahrzeugkoordinatensystems, die Geschwindigkeit bezüglich des Weltkoordinatensystems und den Lenkwinkel.

Der Ausrichtungswinkel zwischen dem Fahrzeugkoordinatensystem und dem Weltkoordinatensystem wird beispielgemäß in der Ausrichtungsmodelleinheit 9 zusätzlich zumindest auf Basis einer oder mehrerer der folgenden Größen berechnet:

eine Ausrichtungsinformation des Fahrzeugs bezogen auf das Weltkoordinatensystem,
einige oder sämtliche der Korrekturwerte und/oder Varianzen des Fusionsfilters und/oder
die Beschleunigung des Fahrzeugs bezogen auf das Fahrzeugkoordinatensystem und/oder das Weltkoordinatensystem.

Die Ausrichtungsmodelleinheit 9 verwendet einige oder sämtliche der Ausgangsdaten und/oder Ausgangssignale der Strapdown-Algorithmus-Einheit 2 zur Berechnung.

Die Ausrichtungsmodelleinheit 9 ist beispielgemäß so ausgebildet, dass sie zusätzlich zu dem Ausrichtungswinkel noch eine Information über die Datenqualität dieser Größe berechnet und bereitstellt, insbesondere die Varianz des Ausrichtungswinkels, wobei die Ausrichtungsmodelleinheit 9 den Ausrichtungswinkel zwischen dem Fahrzeugkoordinatensystem und dem Weltkoordinatensystem sowie die Information über die Datenqualität dieser Größe dem Fusionsfilter 5 bereitstellt und der Fusionsfilter diesen Ausrichtungswinkel bei seinen Berechnungen verwendet und besonders bevorzugt die die Information über die Datenqualität dieser Größe, insbesondere die Varianz des Ausrichtungswinkels, an die Strapdown-Algorithmus-Einheit 2 weiterleitet.

**Patentansprüche**

1. Sensorsystem für ein Fahrzeug, umfassend zumindest zwei Raddrehzahlsensorelemente (3), wenigstens ein Lenkwinkelsensorelement (3) sowie eine Signalverarbeitungseinrichtung, welche so ausgebildet ist, dass sie die Sensorsignale der Sensorelemente zumindest teilweise gemeinsam auswertet, wobei
die Signalverarbeitungseinrichtung ein Fusionsfilter (5) und eine Fahrzeugmodelleinheit (7) umfasst, wobei die Fahrzeugmodelleinheit (7) so ausgebildet ist, dass sie aus den Sensorsignalen der Raddrehzahlsensorelemente und des Lenkwinkelsensorelements zumindest

die Geschwindigkeit entlang einer ersten definierten Achse,

die Geschwindigkeit entlang einer zweiten definierten Achse

sowie die Drehrate um eine dritte definierte Achse berechnet, **dadurch gekennzeichnet, dass** die Fahrzeugmodelleinheit so ausgebildet ist, dass sie zu jeder ihrer drei berechneten Größen

der Geschwindigkeit entlang einer ersten definierten Achse,

der Geschwindigkeit entlang einer zweiten definierten Achse

sowie der Drehrate um eine dritte definierte Achse, eine Varianz als Information über die Datenqualität berechnet und als zusätzliche Ausgabegröße dem Fusionsfilter bereitstellt, und die Fahrzeugmodelleinheit so ausgebildet ist, dass sie auf Basis der berechneten Varianzen die Gültigkeit ihrer eigenen Ausgabegrößen bewertet, und dabei die jeweilige Varianz der Geschwindigkeit entlang der ersten und entlang der zweiten definierten Achse sowie der Drehrate um die dritte definierte Achse bei der Bewertung der Gültigkeit der eigenen Ausgabegrößen berücksichtigt, wobei die Fahrzeugmodelleinheit weiterhin so ausgebildet ist, dass sie die jeweilige Varianz ihrer drei Ausgabegrößen bezüglich der Überschreitung eines oder jeweils eines definierten Grenzwerts prüft, wobei im Fall der Überschreitung einer oder mehrerer der Varianzen keine Gültigkeit der aktuellen Ausgabegrößen der Fahrzeugmodelleinheit gegeben ist.

2. Sensorsystem nach Anspruch 1, **dadurch gekennzeichnet, dass** die erste, die zweite und die dritte definierte Achse ein Erzeugendensystem bilden, und dabei insbesondere senkrecht zueinander ausgerichtet sind.

3. Sensorsystem nach Anspruch 1 oder 2, **dadurch gekennzeichnet, dass** die Fahrzeugmodelleinheit so ausgebildet ist, dass sie zur Berechnung ein Verfahren der kleinsten Fehlerquadrate zur Lösung eines überbestimmten Gleichungssystems, insbesondere als Least-Squared-Error-Verfahren bekannt, verwendet.

4. Sensorsystem nach mindestens einem der Ansprüche 1 bis 3, **dadurch gekennzeichnet, dass** jeweils eins der Raddrehzahlsensorelemente jedem Rad des Fahrzeugs zugeordnet ist, wobei
die Fahrzeugmodelleinheit so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere
erfasst durch das wenigstens eine Lenkwinkelsorelement für die eine oder jeweils für die mehreren gelenkten/ lenkbaren Achsen und/oder durch zumindest eine Modellannahme für eine oder mehrere ungelenkte/ nicht lenkbare Achsen,
die Geschwindigkeitskompenenten und/oder die Geschwindigkeit, jedes Rades, entlang/bezüglich der ersten und der zweiten definierten Achse direkt oder indirekt berechnet,
wobei aus diesen Geschwindigkeitskomponenten bezogen auf die jeweiligen Räder und/oder den Geschwindigkeiten jeweils bezüglich der ersten und zweiten definierten Achse der zugeordneten Räder,
die Geschwindigkeit entlang einer ersten definierten Achse,
die Geschwindigkeit entlang einer zweiten definierten Achse
sowie die Drehrate um eine dritte definierte Achse berechnet wird.

5. Sensorsystem nach mindestens einem der Ansprüche 1 bis 4, **dadurch gekennzeichnet, dass** das Sensorsystem vier Raddrehzahlsensorelemente aufweist, wobei jeweils eins der Raddrehzahlsensorelemente jedem Rad des Fahrzeugs zugeordnet ist, wobei
die Fahrzeugmodelleinheit so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das Lenkwinkelsensorelement für die Vorderräder und aus einer Modellannahme oder wenigstens mittels eines weiteren Lenkwinkelsensorelements für die Hinterräder,
die Geschwindigkeitskompenenten und/oder die Geschwindigkeit, jedes Rades, entlang/bezüglich der ersten und der zweiten definierten Achse direkt oder indirekt berechnet,
wobei aus diesen acht Geschwindigkeitskomponenten und/oder den vier Geschwindigkeiten jeweils bezüglich der ersten und zweiten definierten Achse,
die Geschwindigkeit entlang einer ersten definierten Achse,
die Geschwindigkeit entlang einer zweiten definierten Achse
sowie die Drehrate um eine dritte definierte Achse berechnet wird.

6. Sensorsystem nach mindestens einem der Ansprüche 1 bis 5, **dadurch gekennzeichnet, dass** die Fahrzeugmodelleinheit so ausgebildet ist, dass sie bei ihrer Berechnung mindestens folgende physikalische Größen und/oder Parameter berücksichtigt

a) den Lenkwinkel jedes Rades, insbesondere durch den Lenkwinkelsensor für die beiden Vorderräder erfasst, wobei die Modellannahme getroffen wird, dass der Lenkwinkel der Hinterräder bekannt ist, insbesondere ist der Lenkwinkel der Hinterräder gleich Null oder der Lenkwinkel der Hinterräder wird zusätzlich erfasst,
b) die Raddrehzahl oder eine davon abhängige Größe jeden Rades,
c) die Drehrichtung jeden Rades,
d) der dynamische Halbmesser und/oder Raddurchmesser jeden Rades oder eine davon abgeleitete Größe als Parameter, welcher insbesondere als konstanter, dem Modell bekannter Wert berücksichtigt wird oder geschätzt und/oder berechnet wird, und
e) die Spurbreite jeder Achse des Fahrzeugs und/oder den Radstand zwischen den Achsen des Fahrzeugs.

**7.** Sensorsystem nach Anspruch 6, **dadurch gekennzeichnet, dass** die Fahrzeugmodelleinheit so ausgebildet ist, dass sie bei ihrer Berechnung mindestens eine der folgenden physikalische Größen und/oder Parameter berücksichtigt f) den Schräglaufwinkel jeden Rades, insbesondere aus der Querbeschleunigung, also der Beschleunigung in Richtung der zweiten definierten Achse, berechnet und/oder g) den Radschlupf, insbesondere aus Radkräften und/oder Beschleunigungen der jeden Rades berechnet.

**8.** Sensorsystem nach mindestens einem der Ansprüche 1 bis 7, **dadurch gekennzeichnet, dass** die Signalverarbeitungseinrichtung eine Reifenparameterschätzungseinheit umfasst, welche so ausgebildet ist, dass sie zumindest den Halbmesser, insbesondere den dynamischen Halbmesser, jeden Rades oder eine davon abhängige oder abgeleitete Größe berechnet und/oder schätzt und der Fahrzeugmodelleinheit als zusätzliche Eingangsgröße bereitstellt.

**9.** Sensorsystem nach Anspruch 8, **dadurch gekennzeichnet, dass** die Reifenparameterschätzungseinheit so ausgebildet ist, dass sie zusätzlich
die Schräglaufsteifigkeit und
die Schlupfsteifigkeit jeden Rades oder eine davon abhängige oder abgeleitete Größe berechnet und/oder schätzt und der Fahrzeugmodelleinheit als zusätzliche Eingangsgröße bereitstellt, wobei die Reifenparameterschätzungseinheit so ausgebildet ist, dass sie insbesondere ein im Wesentlichen lineares Reifenmodell zur Berechnung der Rad-/Reifengrößen verwendet.

**Claims**

**1.** A sensor system for a vehicle, comprising at least two wheel rotation speed sensor elements (3), at least one steering angle sensor element (3) and a signal processing device which is adapted to jointly evaluate at least in part the sensor signals of the sensor elements, wherein
the signal processing device comprises a fusion filter (5) and a vehicle model unit (7), wherein the vehicle model unit (7) is adapted to calculate from the sensor signals of the wheel rotation speed sensor elements and the steering angle sensor element, at least
the velocity of the vehicle along a first defined axis,
the velocity of the vehicle along a second defined axis, and
the rotation rate of the vehicle about a third defined axis, **characterized in that**
the vehicle model unit is adapted, for each of its three calculated variables,
namely the velocity along a first defined axis,
the velocity along a second defined axis, and the rotation rate about a third defined axis,
to calculate a variance as information relating to the data quality and provides this as an additional output variable to the fusion filter, and the vehicle model unit is adapted to evaluate the validity of its own output variables on the basis of the calculated variances and in the process takes into consideration the respective variance of the velocity along the first and along the second defined axis and of the rotation rate about the third defined axis in the evaluation of the validity of its own output variables, wherein the vehicle model unit is further adapted to check the respective variance of its three output variables with respect to a or in each case one defined limit value being overshot, wherein, in the event of one or more of the variances being overshot, no validity of the present output variables of the vehicle model unit is provided.

**2.** The sensor system according to claim 1, **characterized in that** the first, the second and the third defined axes form a generating system, and in the process are in particular oriented perpendicular to one another.

**3.** The sensor system according to claim 1 or 2, **characterized in that** the vehicle model unit is adapted to use, in particular, a least-squared-error method for solving an overdetermined system of equations for the calculation.

**4.** The sensor system according to at least one of claims 1 to 3, **characterized in that** in each case one of the wheel rotation speed sensor elements is assigned to each wheel of the vehicle, wherein the vehicle model unit is adapted to calculate, directly or indirectly, the velocity components and/or the velocity of each wheel along/with respect to the first and the second defined axes from the sensor signals of the wheel rotation speed sensor elements and the steering angle, provided by the steering angle sensor unit, and/or the steering angle of each wheel, in particular detected by the at least one steering angle sensor element for the one or in each case for the plurality of steered/steerable axles and/or by at least one model assumption for one or more unsteered/unsteerable axles,

wherein, from these velocity components, in relation to the respective wheels and/or the velocities in each case with respect to the first and second defined axes of the associated wheels,

the velocity of the vehicle along a first defined axis, the velocity of the vehicle along a second defined axis and the rotation rate of the vehicle about a third defined axis are calculated.

5. The sensor system according to at least one of claims 1 to 4, **characterized in that** the sensor system has four wheel rotation speed sensor elements, wherein in each case one of the wheel rotation speed sensor elements is assigned to each wheel of the vehicle, wherein the vehicle model unit is adapted to calculate, directly or indirectly, the velocity components and/or the velocity of each wheel along/with respect to the first and the second defined axes from the sensor signals of the wheel rotation speed sensor elements and the steering angle, provided by the steering angle sensor unit, and/or the steering angle of each wheel, in particular detected by the steering angle sensor element for the front wheels and from a model assumption or at least by means of a further steering angle sensor element for the rear wheels,

wherein, from these eight velocity components and/or the four velocities, in each case with respect to the first and second defined axes,

the velocity of the vehicle along a first defined axis, the velocity of the vehicle along a second defined axis and the rotation rate of the vehicle about a third defined axis are calculated.

6. The sensor system according to at least one of claims 1 to 5, **characterized in that** the vehicle model unit is adapted to consider in its calculation, at least the following physical variables and/or parameters:

   a) the steering angle of each wheel, in particular detected by the steering angle sensor for the two front wheels, wherein the model assumption is applied that the steering angle of the rear wheels is known, in particular the steering angle of the rear wheels is equal to zero or the steering angle of the rear wheels is additionally detected,
   b) the wheel rotation speed or a variable dependent thereon of each wheel,
   c) the direction of rotation of each wheel,
   d) the dynamic radius and/or wheel diameter of each wheel or a variable derived therefrom as a parameter, which is taken into consideration or estimated and/or calculated as the constant value which is known to the model, and

   e) the track width of each axle of the vehicle and/or the wheelbase between the axles of the vehicle.

7. The sensor system according to claim 6, **characterized in that** the vehicle model unit is adapted to consider, in its calculation, at least one of the following physical variables and/or parameters:

   f) the slip angle of each wheel, calculated in particular from the transverse acceleration, i.e. the acceleration in the direction of the second defined axis; and/or
   g) the wheel slip, calculated in particular from wheel forces and/or accelerations of each wheel.

8. The sensor system according to at least one of claims 1 to 7, **characterized in that** the signal processing device comprises a tyre parameter estimation unit, which is adapted to calculate and/or estimate at least the radius, in particular the dynamic radius, of each wheel or a variable dependent thereon or derived therefrom and provides this to the vehicle model unit as an additional input variable.

9. The sensor system according to claim 8, **characterized in that** the tyre parameter estimation unit is adapted to additionally calculate and/or estimate the cornering stiffness, and

the slip stiffness of each wheel or a variable dependent thereon or derived therefrom and provides it to the vehicle model unit as an additional input variable, wherein the tyre parameter estimation unit is adapted in particular to use a substantially linear tyre model for the calculation of the tyre/wheel variables.

**Revendications**

1. Système capteur destiné à un véhicule, comprenant au moins deux éléments de capteur de vitesse de rotation de roue (3), au moins un élément de capteur d'angle de braquage (3) ainsi qu'un dispositif de traitement de signal, qui est conçu pour évaluer au moins partiellement ensemble les signaux de capteur des éléments de capteur,

le dispositif de traitement de signal comprenant un filtre de fusionnement (5) et une unité de modèle de véhicule (7), l'unité de modèle de véhicule (7) étant conçue pour calculer au moins la vitesse le long d'un premier axe défini,

la vitesse le long d'un deuxième axe défini

ainsi que la cadence de rotation autour d'un troisième axe défini, à partir des signaux de capteur des éléments de capteur de vitesse de rotation de roue et de l'élément de capteur d'angle de braquage, **caractérisé en ce que** l'unité de modèle de véhicule est conçue pour calculer, pour chacune de ses trois grandeurs calculées,
la vitesse le long d'un premier axe défini,
la vitesse le long d'un deuxième axe défini
ainsi que la cadence de rotation autour d'un troisième axe défini,
une variance comme information sur la qualité des données et la mettre à la disposition du filtre de fusionnement en tant que grandeur de sortie supplémentaire, et l'unité de modèle de véhicule est conçue pour évaluer la validité de ses propres grandeurs de sortie sur la base des variances calculées, et prendre en compte à cet effet la variance respective de la vitesse le long du premier et le long du deuxième axe définis ainsi que la cadence de rotation autour du troisième axe défini pour l'évaluation de la validité des propres grandeurs de sortie, l'unité de modèle de véhicule étant en outre conçue pour vérifier la variance respective de ses trois grandeurs de sortie par rapport au dépassement d'une ou respectivement d'une valeur limite définie, aucune validité des grandeurs de sortie actuelles de l'unité de modèle de véhicule n'étant donnée dans le cas du dépassement d'une ou de plusieurs des variances.

**2.** Système capteur selon la revendication 1, **caractérisé en ce que** le premier, le deuxième et le troisième axe définis forment un système générateur, et sont alors en particulier orientés perpendiculairement les uns par rapport aux autres.

**3.** Système capteur selon la revendication 1 ou 2, **caractérisé en ce que** l'unité de modèle de véhicule est conçue pour utiliser pour le calcul une méthode des moindres carrés pour résoudre un système d'équations surdéterminé, connue en particulier sous le nom de méthode « least square error ».

**4.** Système capteur selon au moins une des revendications 1 à 3, **caractérisé en ce que** respectivement un des éléments de capteur de vitesse de rotation de roue est associé à chaque roue du véhicule, l'unité de modèle de véhicule étant conçue pour calculer directement ou indirectement les composantes de vitesse et/ou la vitesse, de chaque roue, le long du/par rapport au premier et le long du / par rapport au deuxième axe définis, à partir des signaux de capteur des éléments de capteur de vitesse de rotation de roue et de l'angle de braquage, mis à disposition par l'unité de capteur d'angle de braquage, et/ou de l'angle de braquage de chaque roue, en particulier détecté par l'au moins un élément de capteur d'angle de braquage pour l'essieu dirigé/orientable ou respectivement pour les plusieurs essieux dirigés/orientables et/ou par au moins une supposition basée sur un modèle pour un ou plusieurs essieux non dirigés / non orientables,

dans lequel, à partir de ces composantes de vitesse par rapport aux roues respectives et/ou des vitesses respectivement par rapport au premier et au deuxième axe définis des roues associées,
la vitesse le long d'un premier axe défini
la vitesse le long d'un deuxième axe défini
ainsi que la cadence de rotation autour d'un troisième axe défini, sont calculées.

**5.** Système capteur selon au moins une des revendications 1 à 4, **caractérisé en ce que** le système de capteur comporte quatre éléments de capteur de vitesse de rotation de roue, respectivement un des éléments de capteur de vitesse de rotation de roue étant associé à chaque roue du véhicule, l'unité de modèle de véhicule étant conçue pour calculer directement ou indirectement les composantes de vitesse et/ou la vitesse, de chaque roue, le long du / par rapport au premier et le long du / par rapport au deuxième axe définis, à partir des signaux de capteur des éléments de capteur de vitesse de rotation de roue et de l'angle de braquage, mis à disposition par l'unité de capteur d'angle de braquage, et/ou de l'angle de braquage de chaque roue, en particulier détecté par l'élément de capteur d'angle de braquage pour les roues avant et à partir d'au moins une supposition basée sur un modèle ou au moins au moyen d'un autre élément de capteur d'angle de braquage pour les roues arrière,
dans lequel, à partir de ces huit composantes de vitesse et/ou des quatre vitesses respectivement par rapport au premier et au deuxième axe définis,
la vitesse le long d'un premier axe défini,
la vitesse le long d'un deuxième axe défini
ainsi que la cadence de rotation autour d'un troisième axe défini, sont calculées.

**6.** Système capteur selon au moins une des revendications 1 à 5, **caractérisé en ce que** l'unité de modèle de véhicule est conçue pour prendre en compte lors de son calcul au moins les grandeurs physiques et/ou paramètres suivants

a) l'angle de braquage de chaque roue, en particulier détecté par le capteur d'angle de braquage pour les deux roues avant, en supposant sur la base d'un modèle que l'angle de braquage des roues arrière est connu, l'angle de braquage des roues arrière étant en particulier égal à zéro ou l'angle de braquage des roues arrière étant détecté en plus,
b) la vitesse de rotation de roue ou une grandeur dépendante de celle-ci pour chaque roue,
c) le sens de rotation de chaque roue,
d) le rayon dynamique et/ou le diamètre de roue de chaque roue ou une grandeur dérivée de ceux-ci comme paramètre qui est en particulier pris en compte ou estimé et/ou calculé comme valeur constante connue par le modèle, et
e) la voie de chaque essieu du véhicule et/ou l'empattement entre les essieux du véhicule.

7. Système capteur selon la revendication 6, **caractérisé en ce que** l'unité de modèle de véhicule est conçue pour prendre en compte lors de son calcul au moins une des grandeurs physiques et/ou un des paramètres suivants f) l'angle de dérive de chaque roue, en particulier calculé à partir de l'accélération transversale, autrement dit l'accélération dans la direction du deuxième axe défini et/ou g) le patinage de roue, en particulier calculé à partir des charges de roue et/ou des accélérations de chaque roue.

8. Système capteur selon au moins une des revendications 1 à 7, **caractérisé en ce que** le dispositif de traitement de signal comprend une unité d'estimation des paramètres de pneu, qui est conçue pour calculer et/ou estimer au moins le rayon, en particulier le rayon dynamique, de chaque roue ou une grandeur dépendante ou dérivée de celui-ci et mettre celui-ci ou celle-ci à disposition de l'unité de modèle de véhicule comme grandeur d'entrée supplémentaire.

9. Système capteur selon la revendication 8, **caractérisé en ce que** l'unité d'estimation des paramètres de pneu est conçue pour, en outre calculer et/ou estimer la rigidité à la dérive et la rigidité au patinage de chaque roue ou une grandeur dépendante ou dérivée de celles-ci et les mettre à la disposition de l'unité de modèle de véhicule comme grandeur d'entrée supplémentaire, l'unité d'estimation des paramètres de pneu étant conçue pour utiliser un modèle de pneu sensiblement linéaire pour calculer les grandeurs de roue/pneu.

Fig. 1

EP 2 755 868 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010063984 A1
- WO 2007143806 A2